Europäisches Patentamt

European Patent Office

Office européen des brevets

(11) Numéro de publication: **0 064 899**

**A2**

(12) # DEMANDE DE BREVET EUROPEEN

(21) Numéro de dépôt: **82400695.1**

(22) Date de dépôt: **16.04.82**

(51) Int. Cl.³: **G 02 B 7/26**
**G 02 B 5/17**

(30) Priorité: **27.04.81 FR 8108344**

(43) Date de publication de la demande:
**17.11.82 Bulletin 82/46**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Reymond, Jean-Claude**
**THOMSON-CSF SCPI 173, bld Haussmann**
**F-75360 Paris Cedex 08(FR)**

(74) Mandataire: **Trocellier, Roger et al,**
**THOMSON-CSF SCPI 173, Bld Haussmann**
**F-75379 Paris Cedex 08(FR)**

(54) **Dispositif de transport d'image lumineuse par câble optique, et utilisation pour la prise de vues d'images vidéo.**

(57) Dispositif permettant de supprimer la trame apparaissant dans un faisceau ordonné de fibres optiques et due à l'arrangement des fibres, généralement sous forme de faisceaux élémentaires pour former le câble optique.

Il comporte en amont de l'objectif d'entrée (2) un premier prisme de déviation (4) pour disperser le rayonnement en fonction de la longueur d'onde sur la face d'entrée (FE) du câble (1) en sorte que l'image d'un point recouvre plusieurs fibres, et en aval de l'objectif de sortie (3) un deuxième prisme (5) pour fusionner de manière inverse les rayonnements dispersés et reformer l'image sans le défaut de trame de la face de sortie (FS).

FIG_1

EP 0 064 899 A2

1

# DISPOSITIF DE TRANSPORT D'IMAGE LUMINEUSE PAR CABLE OPTIQUE ET UTILISATION POUR LA PRISE DE VUES D'IMAGES VIDEO

La présente invention concerne un dispositif de transport d'image lumineuse par câble optique.

On entend ici par câble optique un faisceau ordonné de fibres optiques, c'est à dire un faisceau formé par un ensemble de fibres conductrices de lumière disposées de façon que les extrémités correspondant à une même fibre sont situées en des positions homologues en x et en y sur les deux faces terminales planes du faisceau. Le rangement homologue des fibres à chaque extrémité permet le transport d'image par de tels faisceaux dits ordonnés ("cohérent" en appellation anglo-saxonne) qui sont prévus pour cet usage.

Il résulte, d'après la constitution même d'un faisceau ordonné que, si une image est formée par un objectif optique sur une face plane d'extrémité, l'énergie lumineuse est transmise par les fibres point par point et se retrouve ordonnée de même à l'autre extrémité pour y reformer la même image lumineuse, aux pertes de transmission près. Cette image est regardée par un observateur, généralement à travers un oculaire ou loupe pour bénéficier d'un grossissement, car les dimensions du câble sont faibles, par exemple 5 X 5 mm ou 7 X 10 mm ; suivant une autre utilisation, l'image de sortie est transportée par l'optique de sortie sur la cible photoréceptrice d'un tube de prise de vue de télévision, lequel peut être à poste fixe ou semi-fixe.

Un faisceau ordonné de fibres optiques comporte en général plusieurs dizaines de milliers de fibres dé petit diamètre, par exemple de 10 à 20 microns. Pour des questions de fabrication, les fibres sont généralement regroupées pour former des faisceaux élémentaires chacun d'eux groupant un nombre réduit de fibres, 5 X 5 ou 6 X 6 fibres par exemple, et le câble se compose en fait d'un groupement ordonné de faisceaux élémentaires. Il en résulte que l'image observée en sortie du câble est affectée par la structure du faisceau ordonné et apparaît comme quadrillée ou tramée. Comme l'optique de sortie est mise au point sur la face terminale correspondante, la structure tramée de l'image est nettement perçue et, subjectivement, il semble même que le faisceau élémentaire soit perçu comme la résolution ultime de l'image, alors que celle-ci devrait être la fibre élémentaire, soit cinq à six fois plus faible.

Le but de l'invention est de perfectionner de tels dispositifs de transport d'image lumineuse pour éliminer l'effet de trame résultant du regroupement en x et y des fibres en faisceaux élémentaires.

Pour résoudre ce problème l'invention propose un dispositif de transport d'image lumineuse par câble optique qui comporte à l'entrée du câble un prisme de déviation pour infliger aux rayons optiques incidents des déviations différentes selon la longueur d'onde, en sorte que l'image d'un point va être portée simultanément par plusieurs fibres optiques et en disposant un prisme analogue de manière homologue en sortie du câble pour fusionner inversement les rayonnements de différentes longueurs d'onde et reformer l'image avec ses couleurs originales mais dont la trame a disparu.

Les particularités de l'invention apparaîtront dans la description qui suit, donnée à titre d'exemple à l'aide des figures annexées qui représentent :

- Fig. 1, un schéma à un dispositif de transport d'image conforme à la présente invention ;

- Fig. 2, un schéma détaillé du fonctionnement optique du dispositif ;

- Fig. 3, un schéma montrant les décalages relatifs des images de longueur d'onde différente résultant de la dispersion ;

- Fig. 4, un schéma d'un appareil de prise de vues d'images vidéo utilisant un dispositif de transfert d'image selon l'invention.

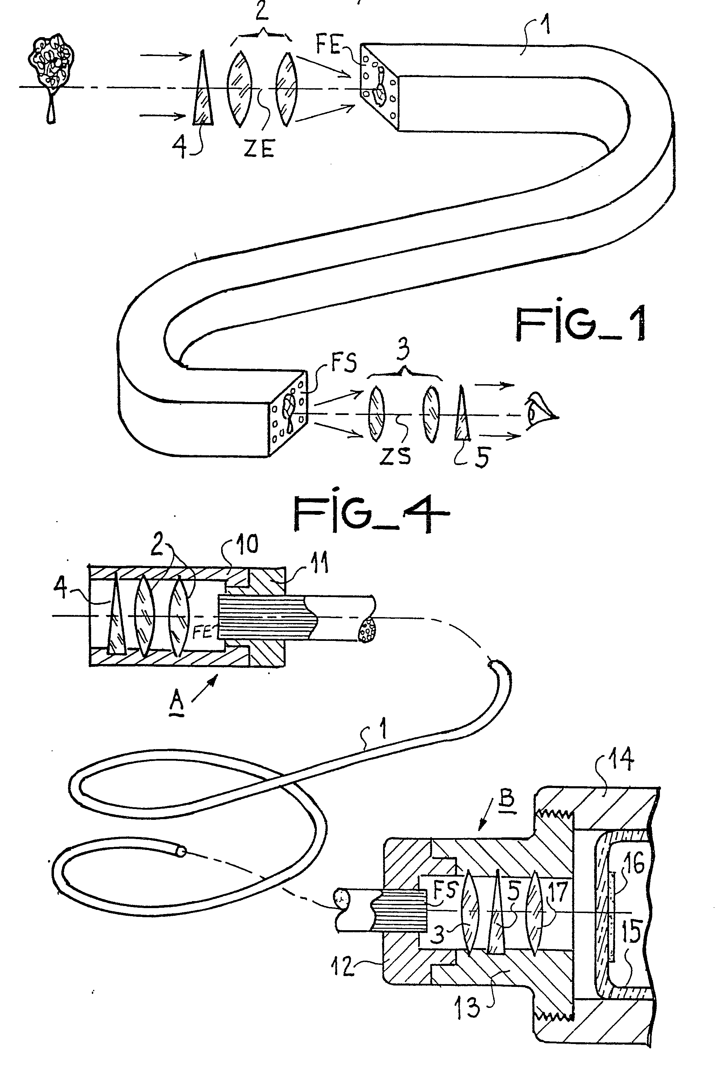

En se reportant à la Fig. 1, le dispositif de transport d'image lumineuse comporte, de manière connue, le faisceau ordonné de fibres optiques 1, un dispositif optique d'entrée 2 et un objectif optique de sortie 3.

Les axes optiques ZE et ZS des objectifs 2 et 3 sont perpendiculaires aux faces planes d'extrémité du câble optique 1, respectivement à la face d'entrée FE et à la face de sortie FS. L'objectif 2 effectue la mise au point de la scène observée sur le plan de la face FE. Dans le cas d'une scène extérieure, un paysage comme représenté, le rayonnement incident peut être considéré formé de rayons parallèles focalisés par l'optique 2 sur le plan FE. L'image lumineuse est reproduite à l'identique côté sortie sur la face FS puisque le câble est ordonné, c'est à dire que les extrémités de chaque fibre sont positionnées de même en x et en y sur les faces FE et FS respectivement. L'objectif optique 3 disposé en aval de la face de sortie FS permet de reprendre le rayonnement lumineux conduit par le câble 1 aboutissant à la face de sortie pour transmettre l'image correspondante vers l'utilisation ; dans le cas considéré l'optique de sortie 3 assure, de manière inverse à celle d'entrée, le passage en rayons parallèles pour une observation visuelle du rayonnement diffusé par chaque extrémité de fibre du plan FS.

Conformément à l'invention, pour éliminer l'effet de trame dû au montage de faisceaux élémentaires juxtaposés en x et en y, on introduit à l'entrée en amont de l'optique 2 un prisme de section triangulaire 4, dit prisme de déviation selon l'appellation conventionnelle, et un prisme analogue 5 côté sortie en aval de l'optique 3.

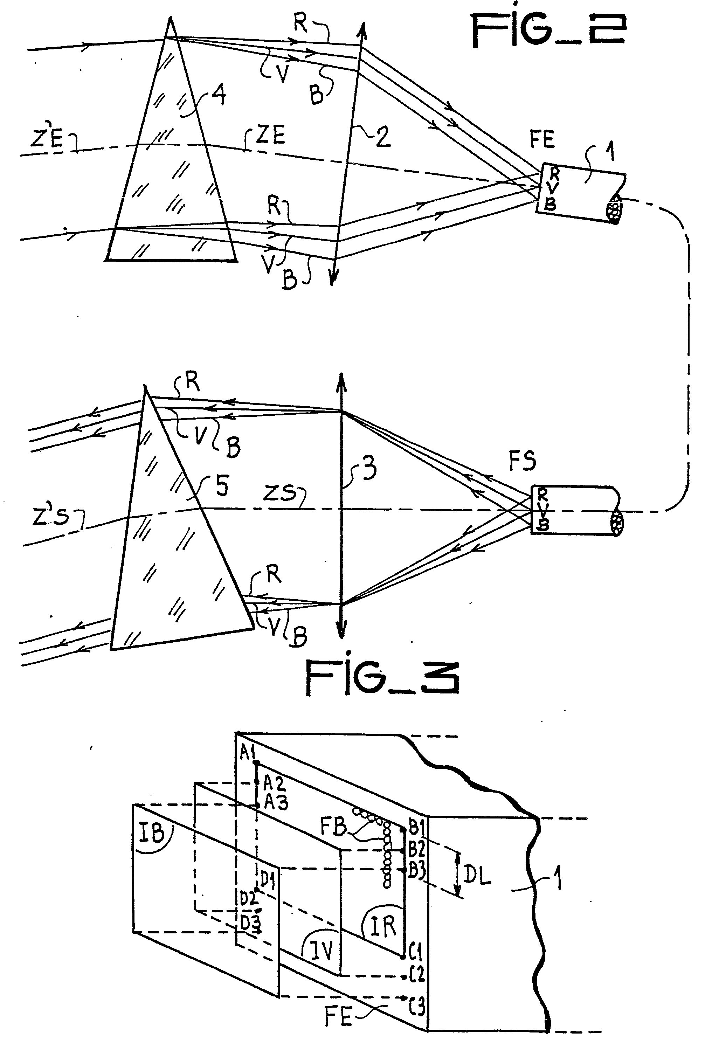

La déviation D d'un prisme est donnée par la relation approchée $D = (n-1)A$, où n est l'indice de réfraction du prisme et A l'angle du sommet. La déviation est croissante avec A et avec n. On sait également que la lumière blanche ou une lumière polychromatique est décomposée par le prisme selon ses diverses raies ; c'est le phénomène de dispersion dû à ce que l'indice du verre dépend de la couleur, donc de la longueur d'onde, et les déviations infligées sont différentes selon les longueurs d'ondes reçues. Les radiations rouges R sont moins déviées que les vertes V qui sont elles-mêmes moins déviées que les bleues B, comme représenté sur la Fig. 2.

Cette propriété de dispersion est utilisée selon l'invention pour produire à l'entrée des images relatives aux différentes longueurs d'ondes décalées dans le plan FE. La Fig. 3 montre, en exagérant l'écart, une telle situation. L'image rouge IR va être produite en A1B1C1D1, l'image verte IV en A2B2C2D2, et l'image bleue IB en A3B3C3D3. Pour plus de clarté, les images IV et IB ont été volontairement déplacées à l'avant de la face d'entrée FE. Ainsi, l'image d'un point va se trouver formée selon une étendue DL corres-pondant à la dispersion spectrale produite par le prisme, et les radiations contribuant à former l'image d'un point vont maintenant être transportées simultanément par plusieurs fibres optiques FB et non par une seule. En disposant à l'autre extrémité un deuxième prisme 5 analogue au premier, les images IR, IV, IB, etc., portées par les différentes longueurs d'ondes vont pouvoir être fusionnées de manière inverse pour reformer l'image avec ses couleurs originales mais dont la trame a disparu.

La Fig. 2 illustre le fonctionnement. Le déplacement DL d'un point de l'image, dû à la dispersion, se produit dans un plan orthogonal à l'arête du prisme 4, tel le plan de figure. L'arête est également parallèle à la face d'entrée FE et perpendiculaire à l'axe optique ZE auquel correspond la direction d'entrée Z'E par suite de la déviation. A la restitution, pour compenser exactement la dispersion, il est nécessaire que le prisme 5 présente la même réponse d'indice de refraction en fonction de la longueur d'onde et il est donc en un même matériau que l'élément 4 ; il faut aussi que sa disposition soit homologue de celle du prisme 4, c'est à dire que l'arête du prisme 5 est parallèle à la face FS et orthogonale à la direction de la dispersion (direction A1-A3, B1-B3, etc., Fig. 3). L'angle au sommet du prisme 5 est le même que celui du prisme 4 si les focales f1 et f2 des optiques 2 et 3 sont égales, sinon il est égal à f1/f2 fois l'angle du prisme d'entrée. Sur la représentation Fig. 2, on s'est placé au minimum de déviation pour la raie médiane, il est entendu que cette disposition n'est pas limitative.

On sait que l'angle au sommet A des prismes doit rester limité si l'on ne veut pas dépasser un seuil de distorsion compatible avec la qualité optique désirée. Par contre, il faut présever de bonnes

5

qualités dispersives en jouant sur le choix du verre. A titre d'exemple, l'angle A est choisi faible, autour de 10°, et le verre peut être un verre existant d'indice de refraction de 1,8 pour la raie du sodium et ayant une dispersion d'indice de 0,32 dans l'étendue du spectre visible.

Le montage est tel que la dispersion DL au niveau de la face FE couvre plus d'une fibre ; la valeur DL sera déterminée en relation avec les dimensions d'un faisceau élémentaire qui atteint généralement cinq à sept fois le diamètre d'une fibre.

La fig. 4 se rapporte à une utilisation possible pour la prise de vues d'images vidéo, notamment de télévision. La partie terminale côté entrée FE du câble 1 et les éléments optiques 2 et 4 sont montés ensemble avec des pièces mécaniques 10 et 11 qui les supportent et assurent leur positionnement respectif. L'ensemble A ainsi constitué est de faible dimension, léger, maniable aisément par un opérateur évoluant à distance de la caméra située à l'autre extrémité en B. Cette seconde partie comporte, de même, les éléments optiques 3 et 5 dans une structure mécanique 12, 13 solidaire du boîtier 14 de la caméra symbolisée par l'extrémité de son tube 15, tel un vidicon, et son optique associée 17. Celle-ci focalise le rayonnement parallèle en sortie du prisme 15 pour reformer l'image du champ observé sur la cible photoréceptrice 16 du tube.

Par souci de simplification et en tenant compte des faibles valeurs d'angle des prismes, la déviation des axes a été négligée dans les représentations Figs. 1 et 4.

## REVENDICATIONS

1. Dispositif de transport d'image lumineuse par un câble optique, composé d'un câble optique (1) formé par un faisceau de fibres optiques terminé par deux faces planes d'extrémité, une face d'entrée (FE) et une face de sortie (FS), le faisceau étant ordonné c'est à dire que les fibres optiques sont rangées pour que les extrémités d'une même fibre occupent la même position en x et en y dans les deux faces d'extrémité, et de deux objectifs optiques associés respectivement aux faces d'extrémité du câble, un objectif d'entrée (2) formant l'image lumineuse à transporter sur la face d'entrée et un objectif de sortie (3) disposé en aval de la face de sortie pour reprendre le rayonnement de l'image conduit par le câble jusqu'à cette face de sortie et le transmettre vers l'utilisation ; le dispositif étant caractérisé par le fait qu'il comporte, en outre, deux prismes de déviation, un premier prisme (4) disposé en amont de l'objectif d'entrée et un deuxième prisme (5) disposé en aval de l'objectif de sortie, le premier prisme pour produire une dispersion du rayonnement en fonction des différentes longueurs d'ondes en sorte que l'image d'un point recouvre plusieurs extrémités de fibres optiques (FB) sur la face d'entrée, le deuxième prisme pour fusionner de manière inverse les rayonnements respectifs délivrés par la face de sortie et reformer l'image.

2. Dispositif selon la revendication 1, caractérisé en ce que les prismes sont en un même verre ayant de bonnes propriétés dispersives.

3. Dispositif selon la revendication 2, caractérisé en ce que les valeurs d'angle au sommet des prismes sont de l'ordre de 10 degrés.

4. Dispositif selon l'une quelquonque des revendications 1, 2, 3, caractérisé en ce que les deux prismes travaillent en rayonnement parallèle, l'objectif d'entrée assurant une focalisation et l'objectif de sortie un rôle inverse.

5. Utilisation d'un dispositif de transport d'image lumineuse par câble optique selon l'une quelconque des revendications 1 à 4 pour réaliser un appareil de prise de vue d'images vidéo, caractérisé en ce que le dispositif est monté en avant de l'optique (17) de la caméra de prise de vue (14).

FIG_1

FIG_4

FIG_2

FIG_3